# EUROPÄISCHE PATENTSCHRIFT

(11) **EP 2 647 522 B1**
(45) Veröffentlichungstag und Bekanntmachung des Hinweises auf die Patenterteilung: **22.01.2020**
(21) Anmeldenummer: 12163007.3
(22) Anmeldetag: 03.04.2012
(51) Int. Cl.: H02J 7/00, H02J 1/10, B60L 50/51, B60L 53/30, B60L 55/00, B60L 53/10, B60L 53/56, B60L 53/53, B60L 58/10, B60L 53/63

(54) **Stromtankstelle mit Schnellladestationen**
Electricity charging point with quick-charge stations
Station-service électrique avec stations de charge rapide

(43) Veröffentlichungstag der Anmeldung: 09.10.2013
(73) Patentinhaber: Enrichment Technology Company Ltd., 52409 Jülich (DE)
(72) Erfinder: Dureau, Guillaume, 75017 Paris (FR); vor dem Esche, Rainier, 52525 Heinsberg (DE); Treppmann, Christoph, 52074 Aachen (DE)
(74) Vertreter: FARAGO Patentanwälte

(56) Entgegenhaltungen:
- WO-A1-2011/021718
- WO-A2-2010/042550
- DE-A1-102009 046 422
- US-A1- 2010 181 957

## Beschreibung

### Gebiet der Erfindung

Die Erfindung bezieht sich auf eine Stromtankstelle mit mindestens einem lastwechselfesten Energiespeicher, geeignet zur parallelen Schnellaufladung einer Mehrzahl an mobilen Speichern, auf ein Verfahren zum Betreiben einer solchen Stromtankstelle und auf ein Verfahren zum Umrüsten einer konventionellen Stromtankstelle in die erfindungsgemäße Stromtankstelle.

### Hintergrund der Erfindung

Ein Elektrofahrzeug mit einem Elektroantrieb ist einem gewöhnlichen Fahrzeug mit Verbrennungsmotor in vielen Eigenschaften überlegen. Dazu zählen beispielsweise der viel höhere Wirkungsgrad sowie die vorteilhafte Drehmoment- und Leistungscharakteristik des Elektromotors, der zumeist einfachere Aufbau des Antriebsstrangs und die fast vollständige lokale Emissionsfreiheit in Bezug auf Schadstoffe und Lärm. Elektroautos sind somit als emissionsfreie Fahrzeuge insbesondere in Ballungsräumen sehr geeignet. Im Vergleich zu Fahrzeugen mit Verbrennungsmotoren verfügen aktuelle Elektrofahrzeuge jedoch aufgrund der geringen Ladekapazitäten der Energiespeicher im Fahrzeug, typischerweise Batterien (Akkus), zumeist über erheblich geringere Reichweiten. Gegenwärtig benötigen die Akkus von Elektrofahrzeugen einen längeren Ladezeitraum (mehrere Stunden), beispielsweise werden die entladenen Batterien zu Hause über Nacht oder am Tag während der Arbeitszeit geladen. Kleinere Elektrofahrzeuge verfügen über eine kleine Batteriekapazität und können mit einfachen Mitteln (übliche Haushaltssteckdosen mit 230 V, 16 A) aufgeladen werden. Mit diesen Lademitteln bleibt das Elektroauto allerdings auf einen kleinen Aktionsradius um die tägliche Ladestation herum beschränkt. Elektroautos mit größeren Batterien könnten auch in einer Ladestation mit einem elektrischen Drehstromanschluss mit 400 V, 32 A geladen werden.

Um eine kontinuierliche Mobilität von Elektrofahrzeugen über weitere Strecken ohne lange Ladezeiten zu gewährleisten, können beispielsweise entladene Fahrzeugakkumulatoren (Akku's) in einem Netz von Batteriewechselstationen in kurzer Zeit durch bereits aufgeladene Akkus ausgetauscht werden. Diese Batteriewechselstationen müssten dafür allerdings einen größeren Vorrat an Batterien vorhalten, um jederzeit eine ausreichende Anzahl an geladenen Akkus zur Verfügung stellen zu können, was entsprechend logistisch und versorgungstechnisch aufwendig und kostenintensiv wäre.

Um die Nutzerfreundlichkeit von Elektrofahrzeugen zu steigern, wird eine schnellere Ladung (Strombetankung) angestrebt. Ladezeiten von einer Stunde sind gut erreichbar, sofern die dafür benötigten Leistungen zur Verfügung stehen und die Fahrzeuge mit den Ladegeräten ausgerüstet sind. Die Aufladung herkömmlicher Fahrzeuge mit Akkumulatoren von 12 bis 20 kWh Energieinhalt benötigt mindestens einen Dreiphasenanschluss mit 16 A (11 kW) oder 32 A (22 kW). Ladezeiten von ca. 1 Stunde sind aber für den Fernfahrbetrieb von Elektrofahrzeugen immer noch deutlich zu lange. Mit sogenannten Schnellladestationen könnte die elektrische Energie für über 150 Fahrkilometer (rund 30 kWh) in 10 bis 20 Minuten aus dem Netz in schnell-ladefähige Fahrzeugbatterien, beispielsweise Lithium-Ionen-Akkumulatoren, geladen werden. Dadurch könnte der logistische und technische Aufwand einer Batteriewechselstation mit einer Vielzahl an dort vorgehaltenen Batterien vermieden werden. Allerdings ist das Bereitstellen sehr hoher Ströme aufgrund der durch das allgemeine Stromnetz bedingten Restriktionen (beispielsweise die Beschränkung der verfügbaren Strommenge durch die Hauptsicherung des Netzanschlusses) meist nicht möglich.

Dokument DE 10 2008 052 827 A1 beschreibt eine autarke Stromtankstelle, mit der solche Netzrestriktionen überwunden werden, indem die für das Aufladen benötigte elektrische Energie direkt am Ort der Tankstelle erzeugt und bereitgestellt wird. Die elektrische Energie wird am Ort der Stromtankstelle durch eine Anlage zur Nutzung erneuerbarer Energien, beispielsweise durch eine Windenergieanlage, erzeugt und mithilfe einer Elektrolyseanlage in Form von Wasserstoff zwischengespeichert. Die elektrische Energie zum Schnellaufladen der Fahrzeugbatterien wird dann aus dem Wasserstoffenergiespeicher mittels Brennstoffzelle zurückgewonnen und an den Ladestationen der Stromtankstelle

### Neue Beschreibungsseiten 3, 3a, 12, 13 und 14 (ersetzen die vorherigen Beschreibungsseiten 3, 12, 13 und 14)

Energie versorgt werden, was für zukünftige Elektrofahrzeuge einer Reichweite von 150 - 200km entspricht und bezüglich der Ladezeit für den Kunden akzeptabel ist.

Dokument US 2010/181957 A1 offenbart ein System zum Aufladen einer Vielzahl an Elektrofahrzeugen ohne Abhängigkeit von einem Stromnetz unter Verwendung der in diesem System miteinander verbundenen Batterien der Elektrofahrzeuge als stromnetzunabhängiger Energiespeicher. Das System umfasst Solarmodule und ein intelligentes Lademanagementsystem, das flexible Auflade-Raten für die Elektrofahrzeuge bereitstellen kann, und das vom Stromnetz entkoppelt ist, und somit nicht zum Strombedarf in Spitzenzeiten beiträgt. Eine elektrische Verbindung mit niedriger Kapazität zum Stromnetzt ist zur Sicherheit vorhanden, die Solarmodule dienen zum Lastausgleich. Überschüssige Solarenergie kann ins Netz in Zeiten geringem Bedarfs durch die Ladestationen eingespeist werden, wie beispielsweise an Wochenenden.

Dokument DE 10 2009 046422 A1 offenbart ein Ladesystem für Elektrofahrzeuge. Das Ladesystem umfasst eine eingangsseitig über eine Anschlussstelle an ein Wechselstromnetz anschließbare, einen AC/DC-Wechselrichter aufweisende Netzladestufe, eine Steuereinrichtung zur Überwachung eines Ladevorgangs sowie mindestens einen ausgangsseitigen Ladeanschluss, welch letzterer zeitweilig mit einem Fahrzeugakkumulator verbindbar ist. Hierbei ist an die Netzladestufe ein Pufferakkumulator mit einer gegenüber dem Fahrzeugakkumulator signifikant höheren Ladekapazität angeschlossen. An den Pufferakkumulator ist eine die Steuereinrichtung und einen DC/DC-Wechselrichter umfassende, ausgangsseitig über den Ladeanschluss zeitweilig mit einem Fahrzeugakkumulator verbindbare Schnellladestufe angeschlossen. Außerdem ist der Pufferakkumulator ausgangsseitig über eine Schalteinheit und einen DC/AC-Wechselrichter aufweisende Rückspeisestufe an einer Einspeisestelle auf das Wechselstromnetz aufschaltbar. Die autarke (lokale) Erzeugung und Bereitstellung von elektrischer Energie in Kombination mit einem Energiezwischenspeicher benötigt einen enormen technischen Aufwand für den kombinierten Betrieb einer Energiegewinnungseinheit, einer Energiespeichereinheit und einer Energierückgewinnungseinheit als Teil der Stromtankstelle und ist entsprechend kostenintensiv. Eine weniger aufwendige Lösung für die Bereitstellung hoher Ladeströme, möglichst geeignet für die parallele Aufladung einer Mehrzahl an Fahrzeugakkus, ist daher wünschenswert. Insbesondere wäre es wünschenswert, wenn bestehende Tankstellen mit gewöhnlichen Stromanschlüssen an das allgemeine Stromnetz mit geeigneten Schnellladestationen nachgerüstet werden könnten, ohne dass dafür obige aufwendige Infrastrukturmaßnahmen notwendig wären, insbesondere wenn Tankstellen keine räumlichen Möglichkeiten für die Hinzufügung von weiträumigen Energiegewinnungsanlagen für einen autarken Betrieb besitzen.

### Zusammenfassung der Erfindung

Es ist eine Aufgabe der vorliegenden Erfindung, mit geringem Aufwand eine sichere Stromtankstelle zur Verfügung zu stellen, die für die parallele Schnellaufladung einer Mehrzahl an mobilen Speichern geeignet ist.

Diese Aufgabe wird gelöst durch eine Stromtankstelle mit einer AC-Stromversorgung, geeignet zur parallelen Schnellaufladung einer Mehrzahl an Akkumulatoren von Elektrofahrzeugen als mobile Speicher, umfassend mindestens eine Schnellladestation, angeschlossen an die AC-Stromversorgung, die über einen Übergabepunkt mit dem allgemeinen Stromnetz verbunden ist, und mindestens einen lastwechselfesten Energiespeicher mit einer Energiespeichersteuereinheit, wobei der lastwechselfeste Energiespeicher über einen AC/DC-Wandler mit der AC-Stromversorgung der Stromtankstelle zur Speicherung elektrischer Energie aus dem allgemeinen Stromnetz und zur Abgabe elektrischer Energie an die AC-Stromversorgung der Stromtankstelle bei Bedarf verbunden ist, wobei der Bedarf an zusätzlicher elektrischer Energie durch mindestens ein geeignetes Mittel in der Stromtankstelle festgestellt wird und das Mittel dazu ausgestaltet ist, ein entsprechendes Bedarfssignal an die Energiespeichersteuereinheit zu übermitteln, die dazu vorgesehen ist, nach Empfang des Bedarfssignals die Abgabe von elektrischer Energie an die AC-Stromversorgung so zu veranlassen, dass weder das allgemeine Stromnetz noch die AC-Stromversorgung der Stromtankstelle durch die parallelen Schnellaufladungen überlastet werden.

Das allgemeine Stromnetz (gewöhnliches AC-Netz) wird bei 400 V betrieben und besitzt eine Kapazität von z.B. 160 kW. Schnellladestationen können heute je nach Ladezustand und Speicherkapazität des aufzuladenden mobilen Speichers Leistungen von beispielsweise bis zu 100 kW pro Ladestation aus der AC-Stromversorgung der Stromtankstelle abfordern. Da die für die Schnellladung benötigten Ströme kurzzeitig die zulässigen Grenzwerte deutlich übersteigen können, muss die AC-Stromversorgung für die erfindungsgemäße Stromtankstelle geeignet gewählt sein, beispielsweise durch die Installation von Stromleitungen zugelassen für entsprechend hohe Ströme. Die technische Auslegung der AC-Stromversorgung hängt dabei von der Anzahl und Art der Schnellladestationen in der Stromtankstelle ab und sollte so dimensioniert sein, dass über die installierten elektrischen Leitungen der zu erwartende Gesamtstrom bei einer Schnellaufladung, gegebenenfalls parallelen Schnellaufladung mehrerer mobiler Speicher, über alle vorhandenen Schnellladestationen ohne Sicherheitsprobleme fließen kann. Mit Kenntnis der Anzahl und Art der Schnellladestationen ist der Fachmann in der Lage, die geeigneten elektrischen Stromleitungen für die AC-Stromversorgung der Stromtankstelle auszuwählen. Wird die Stromtankstelle nur aus dem allgemeinen Stromnetz versorgt, würde dies zu einer Überlastung des allgemeinen Stromnetzes führen, was gegebenenfalls sogar zu einem Zusammenbruch der Stromversorgung führen kann. Das gewöhnliche allgemeine Stromnetz stellt beispielsweise 160 kW zur Verfügung. Selbst beim Betrieb einer einzelnen Schnelladestation kann bei voller Leistung der Schnellladestation und einem schwachen allgemeinen Stromnetz eine Überlastung des allgemeinen Stromnetzes bei einer Stromtankstelle gemäß dem Stand der Technik auftreten. Dies gilt natürlich erst recht bei einer parallelen Schnellaufladung mehrerer Elektrofahrzeuge mittels mehrerer Schnellladestationen, insbesondere bei jeweils hohen Leistungen.

Das allgemeine Stromnetz ist an einem Übergabepunkt mit der AC-Stromversorgung der Stromtankstelle verbunden. Der Übergabepunkt kann dabei beispielsweise als Lasttrenner oder als Hauptsicherung ausgeführt sein. Im Falle einer Hauptsicherung würde diese bei einer Überlastung auslösen und so zu einer Unterbrechung der Stromversorgung der Stromtankstelle führen. Je mehr Schnellladestationen an einer Stromtankstelle verfügbar sind, desto häufiger kann ein solcher Überlastungszustand bei Stromtankstellen ohne zusätzlichen zuschaltbaren Energiespeicher auftreten, insbesondere bei der zukünftig zu erwartenden steigenden Anzahl an Elektrofahrzeugen. Erfindungsgemäße Stromtankstellen umfassen daher mindestens einen lastwechselfesten Energiespeicher, der über einen AC/DC-Wandler mit der AC-Stromversorgung der Stromtankstelle zur Abgabe elektrischer Energie an die AC-Stromversorgung der Stromtankstelle verbunden ist. Solche Energiespeicher können beispielsweise 500 kW oder mehr (je nach Speicherkapazität) an Leistung kurzfristig für einen entstandenen Bedarf bei der simultanen Strombetankung mehrerer Elektrofahrzeuge zur Verfügung stellen, ohne dass dabei das allgemeine Stromnetz Leistung für die AC-Stromversorgung der Stromtankstelle bereitstellen muss und daher auch nicht überlastet wird. Somit wird die Leistungsbeschränkung durch die Netzleistung von z.B. 160kW zumindest für eine gewisse Zeit überwunden werden, die durch die Speicherkapazität und durch den Ladezustand des lastwechselfesten Energiespeichers vorgegeben ist. Somit können in Abhängigkeit der Speichergröße der mobilen Speicher, beispielsweise Akkumulatoren in den Elektrofahrzeugen, mehr Fahrzeuge parallel und in kürzerer Zeit geladen werden. In einer Ausführungsform umfasst die Stromtankstelle dazu mehrere Schnellladestationen, die parallel zueinander in der AC-Stromversorgung angeordnet sind. Durch die kürzere Ladezeit und/oder durch die Verfügbarkeit von vielen Schnellladestationen an einer Stromtankstelle für eine Vielzahl an Kunden wird den Kunden der Stromtankstelle ein höherer Service (geringere Wartezeit) geboten. So können beispielsweise mit einer 250 kW-Ladestation Lithium-Ionen-Akkus innerhalb von 5 Minuten mit 20 kWh Energie versorgt werden, bei höherer Leistung in sogar noch geringerer Zeit. Zusätzlich wird die allgemeine Stromnetzinfrastruktur nicht überlastet. Insofern kann ein kostenintensiver Netzausbau zur Versorgung von Stromtankstellen vermieden und die vorhandene Infrastruktur der Stromtankstellen weiterhin verwendet werden. Die lastwechselfesten Energiespeicher sind dabei so dimensioniert, dass sie die für die Schnellaufladung benötigte Leistung, die abhängig ist von der Anzahl der Schnelladestationen, über einen längeren Zeitraum, beispielsweise über eine oder mehrere Stunden, abgeben können, bevor diese Energiespeicher entladen sind. Somit verbleiben ausreichend Pufferzeiten ohne Bedarf an zusätzlicher Energie, die für die Wiederaufladung (Speicherung) des lastwechselfesten Energiespeichers genutzt werden.

Der mobile Speicher kann beispielsweise ein Schwungrad oder ein anderer Speicher eines Elektrofahrzeugs, geeignet zur Speicherung von Energie aus elektrischer Energie, sein. In einer Ausführungsform ist der mobile Speicher ein Akkumulator eines Elektrofahrzeugs.

Im Gegensatz zur Leistungsabgabe (Abgabe elektrischer Energie) an die AC-Stromversorgung kann der lastwechselfeste Energiespeicher über längere Zeiträume, in denen der Strombedarf der Stromtankstelle insbesondere für Strombetankungen aus den allgemeinen Stromnetz ohne Überlastung gedeckt werden kann, kontinuierlich aus dem allgemeinen Stromnetz über den daran angeschlossenen AC/DC-Wandler wieder aufgeladen werden. Somit wird das allgemeine Stromnetz mehr oder weniger gleichmäßig durch die abgenommene Leistung der Stromtankstelle für Strombetankungen und Energiespeicheraufladung belastet. Damit wird die Stromabnahme aus dem allgemeinen Stromnetz vergleichmäßigt und planbarer, was zu einer Reduktion der Stromkosten durch günstigere Stromtarife führt. Die für die erfindungsgemäße Stromtankstelle geeigneten Energiespeicher sind lastwechselfeste Energiespeicher, da sich kurze Zeiträume mit einer hohen Lastabgabe für eine parallele Strombetankung mehrerer mobiler Speicher aus dem Energiespeicher mit Zeiträumen geringerer Lastabgabe oder keiner Lastabgabe (Zeiträume der Wiederaufladung des Energiespeichers) abwechseln und somit die abgenommene Last aus dem Energiespeicher zeitlich stark schwankt. Geeignete lastwechselfeste Energiespeicher sind dabei mechanische oder bestimmte elektrische Energiespeicher wie beispielsweise Schwungrad-Energiespeicher, Druckluftspeicher, Flüssigluftspeicher oder Superkondensatoren. Akkumulatoren sind dagegen aufgrund ihrer fehlenden Lastwechselfestigkeit für den häufigen Lastwechsel in Stromtankstellen nur begrenzt geeignet. Außerdem zeichnen sich diese Speicher beispielsweise auch gegenüber Akkumulatoren dadurch aus, dass die volle Speicherkapazität zur Abgabe elektrischer Energie an die AC-Stromversorgung der Stromtankstelle zur Verfügung steht. Akkumulatoren sollten dagegen nur bis zu einer bestimmten Grenze entladen werden, da sogenannte Tiefentladungen den Akkumulator beschädigen. Dies ist bei den voranstehend genannten lastwechselfesten Energiespeichern nicht der Fall. Nichtlastwechselfeste Energiespeicher würden außerdem beim Betrieb einer Stromtankstelle schnell altern oder beschädigt werden, so dass diese nichtlastwechselfesten Energiespeicher häufig ausgetauscht werden müssten, was die Betriebskosten und den Arbeitsaufwand für die Stromtankstelle stark erhöhen würde und die Verfügbarkeit der Stromtankstelle für viele parallele Strombetankungen stark reduzieren würde.

Die Energiespeichersteuereinheit steuert dabei die Aufnahme / Abgabe von Energie aus/ins AC-Stromnetz der Stromtankstelle. Eine Energiespeichersteuereinheit ist beispielsweise ein Steuercomputer (Steuer-PC), der die entsprechende Hardware des lastwechselfesten Energiespeichers über geeignete Schnittstellen ansteuert. In einer Ausführungsform lädt die Energiespeichersteuereinheit den lastwechselfesten Energiespeicher basierend auf einer Verbrauchsvorhersage oder einem vorgegebenen Profil unter Berücksichtigung des Ladezustands des lastwechselfesten Energiespeichers aus dem allgemeinen Stromnetz auf. Verbrauchsvorhersagen können beispielsweise aus einer gemessenen Verbrauchshistorie abgeleitet werden. Dazu ist die Stromtankstelle beispielsweise mit einem Verbrauchssensor, vorzugsweise mit mehreren Verbrauchssensoren, angeordnet in den/an die Ladestationen (Schnellladestationen), ausgestattet, der/die mit einer angeschlossenen Auswerte- und Speichereinheit verbunden ist/sind. Die Energiesteuereinheiten sind für eine Steuerung der Energieabgabe / Speicherung mit der Auswerte- und Speichereinheit über Datenleitungen verbunden. Alternativ kann in der Auswerte- und Speichereinheit ein Ladeprofil des Energiespeichers vorgegeben werden, das den Sollzustand der Kapazität des Energiespeichers vorgibt. Die Energiespeichersteuereinheiten versuchen entsprechend über Abgabe / Aufnahme von Energie den Sollzustand zu erreichen. Hierbei hat allerdings die Abgabe von Energie bei Bedarf an das AC-Stromnetz der Stromtankstelle zur Vermeidung von Netzüberlastungen Vorrang vor einer Aufladung des Energiespeichers. Alternativ kann das Mittel zur Bedarfsfestellung als Verbrauchssensor eingesetzt werden, wobei die Auswerte- und Speichereinheit auch als Komponente in der Energiespeichersteuereinheit angeordnet sein kann.

Die geeigneten Mittel zur Feststellung eines Bedarfs an zusätzlicher elektrischer Energie, die entsprechend der Feststellung ein Bedarfssignal an die Energiespeichersteuereinheit übermittelt, können vom Fachmann im Rahmen der vorliegenden Erfindung geeignet gewählt werden. Beispielsweise kann als geeignetes Mittel das Hineinfahren von aufzuladenden Elektrofahrzeugen in die Stromtankstelle detektiert werden, beispielsweise durch optische Erkennung von Elektrofahrzeugen an den Ladestationen (Schnellladestationen) der Stromtankstelle. Die Detektion von Elektrofahrzeugen an den Schnellladestationen mit dem sich daraus ergebenden wahrscheinlichen Bedarf an Energie könnte durch in den Boden eingelassene Induktionsschleifen um die Schnellladestationen herum erreicht werden. Dadurch wäre der zu erwartende Strombedarf allerdings nur sehr indirekt und aufgrund des nicht bekannten Ladezustands des mobilen Speichers im Elektrofahrzeug nur ungenau schätzbar. Alternativ könnte als geeignetes Mittel vor der Strombetankung über die an den mobilen Speicher des Elektrofahrzeugs angeschlossene Ladestation (Schnellladestation) der Ladezustand des mobilen Speichers bestimmt werden. Die Ladezustandsbestimmung kann gleichzeitig zur Detektion der Anwesenheit eines aufzuladenden Elektrofahrzeugs benutzt werden. Auf diese Weise kann der Bedarf an zusätzlicher elektrischer Energie für die Strombetankung wesentlich genauer abgeschätzt werden. In einer bevorzugten Ausführungsform sind als geeignete Mittel zur Feststellung des Bedarfs an zusätzlicher elektrischer Energie ein oder mehrere Lastsensoren zumindest in der AC-Stromversorgung der Stromtankstelle vor dem Übergabepunkt angeordnet. Der Ausdruck "vor dem Übergabepunkt" bezeichnet die Seite der Stromversorgung, die zwischen Übergabepunkt und Schnellladestationen liegt, also im Bereich der AC-Stromversorgung der Stromtankstelle. Hierbei wird der tatsächliche Strombedarf im AC-Stromnetz der Stromtankstelle gemessen werden, wodurch die Einspeisung von Leistung aus dem lastwechselfesten Energiespeicher zur Vermeidung einer Netzüberlastung sehr genau gesteuert werden kann. Der Fachmann kann die geeigneten Lastsensoren im Rahmen der vorliegenden Erfindung auswählen und an geeigneter Stelle im AC-Stromnetz der Stromtankstelle anordnen. Vorzugsweise werden die Lastsensoren zwischen Übergabepunkt und AC/DC-Wandler angeordnet. In einer alternativen Ausführungsform können sich die Lastsensoren auch jeweils in der Ladestation (Schnellladestation) befinden, wodurch die durch die einzelne Ladestation (Schnellladestation) abgegeriffene Last individuell für jede Ladestation (Schnellladestation) gemessen und anschließend eine genaue Verbrauchsvorhersage aus den Messdaten erstellt werden kann. Die Lastsensoren können somit ebenfalls als Verbrauchssensoren eingestzt werden.

In einer Ausführungsform ist der lastwechselfeste Energiespeicher ein Schwungrad-Energiespeicher mit einer Vielzahl an Speichereinheiten mit jeweils einem Schwungrad, wobei die Speichereinheiten über einen DC-Bus miteinander und über den AC/DC-Wandler mit dem AC-Stromnetz der Stromtankstelle verbunden sind. Die Vielzahl an Speichereinheiten ermöglicht die Bereitstellung eines Energiespeichers mit geeignet hoher Kapazität, wobei die Kapazität an den Bedarf der Stromtankstelle über die Wahl einer geeigneten Anzahl an Speichereinheiten angepasst werden kann. Schwungrad-Energiespeicher besitzen eine geringe Brandlast gegenüber elektrochemischen Speichern. Unter Brandlast wird die Menge und Art der brennbaren Materialien an einem Ort als flächenbezogener Heizwert in Energie pro Fläche verstanden. Ebenso ist das Risiko von Explosionen wie bei Druckluftspeichern bei Beschädigung der Druckluftbehälter oder der entsprechenden Leitungen nicht gegeben. Das Containment der Schwungrad-Energiespeicher bietet gegenüber einem Bersten des Schwungrades genügend Schutz. Schwungrad-Energiespeicher zeigen zudem keine Alterung durch Ladezyklen, so dass die Schwungrad-Energiespeicher gegenüber anderem Energiespeichern sehr lange Zeit mit geringer Wartung betrieben werden können. Außerdem haben derartige Speicher keinerlei Emissionen (wie z.B. CO₂, Schall, oder toxische Stoffe). Dieser emissionsfreie Energiespeicher ermöglicht beliebige Aufstellungsorte ohne örtliche Restriktionen.

In einer bevorzugten Ausführungsform ist der Schwungrad-Energiespeicher so ausgeführt, dass die Busspannung auf dem DC-Bus weitgehend unabhängig vom Ladezustand des Schwungrad-Energiespeichers, insbesondere der Speichereinheiten, ist. Dadurch können die einzelnen Speichereinheiten unabhängig voneinander je nach Bedarf entladen werden.

In einer weiteren Ausführungsform umfasst die Stromtankstelle weitere lastwechselfeste Energiespeicher, die jeweils über einen weiteren AC/DC-Wandler mit der AC-Stromversorgung der Stromtankstelle zur Speicherung elektrischer Energie aus dem allgemeinen Stromnetz und zur Abgabe elektrischer Energie an die AC-Stromversorgung der Stromtankstelle bei Bedarf verbunden sind. So kann die Gesamtkapazität an gespeicherter Energie erhöht werden, ohne dass der einzelne Energiespeicher dabei modifiziert werden muss. Dies erleichtert die Kapazitätserweiterung bei Bedarf und reduziert die dafür notwendigen technischen Maßnahmen, beispielsweise im Vergleich zur aufwendigen Installation zusätzlicher Speichereinheiten bei einem bereits vorhandenen Schwungrad-Energiespeicher. Außerdem können erfindungsgemäße Stromtankstellen mit neuen, parallel in der AC-Stromersorgung angeordneten zusätzlichen Schnellladestationen versehen werden, da die danach benötigte höhere Gesamtenergie durch zusätzlich installierte lastwechselfeste Energiespeicher entsprechend dem Bedarf ebenfalls ohne größeren Aufwand zur Verfügung gestellt werden kann. Die AC-Stromversorgung braucht dazu nicht weiter angepasst zu werden. In einer bevorzugten Ausführungsform sind dabei die Energiespeichersteuereinheiten der lastwechselfesten Energiespeicher über eine Lademanagementeinheit mit dem Mittel zur Feststellung des Bedarfs an zusätzlicher elektrischer Energie verbunden, wobei die Lademanagementeinheit je nach Ladezustand der lastwechselfesten Energiespeicher einzelne oder mehrere lastwechselfeste Energiespeicher für die Speicherung elektrischer Energie aus dem allgemeinen Stromnetz und für die Abgabe von elektrischer Energie an die AC-Stromversorgung auswählt und die jeweiligen Energiespeichersteuereinheiten der lastwechselfesten Energiespeicher entsprechend ansteuert. Dadurch können die Energispeicher je nach Bedarf und Speicherkapazität geeignet betrieben werden.

In einer weiteren Ausführungsform umfasst die Stromtankstelle ein oder mehrere Energieerzeugungseinheiten, die so angeordnet sind, dass sie je nach Art des erzeugten Stroms den Strom vor oder hinter dem AC/DC Wandler in die Stromtankstelle eingespeisen. Solche Energieerzeugungseinheiten sind beispielsweise Photovoltaik-, Wind- oder Blockheizkraftanlagen. Der Ausdruck "vor oder hinter" bezieht sich dabei auf die Anordnung der Energieerzeugungseinheiten relativ zur Anordnung des AC/DC-Wandlers. Der Begriff "hinter dem AC/DC-Wandler" bezeichnet einen Anschluss der Energieerzeugungseinheiten auf der AC-Seite in der AC-Stromversorgung der Stromtankstelle. Der Begriff "vor dem AC/DC-Wandler" bezeichnet einen Anschluss der Energieerzeugungseinheiten auf der DC-Seite zwischen AC/DC-Wandler und lastwechselfestem Energiespeicher, beispielsweise am DC-Bus der Stromtankstelle. Je nachdem, ob die Energieerzeugungseinheiten AC-Strom oder DC-Strom liefern, werden sie hinter (AC-Seite) oder vor (DC-Seite) dem AC/DC-Wandler angeordnet. Solche zusätzlichen Energieerzeugungseinheiten sind insbesondere dann von Vorteil, wenn die Stromtankstelle nur an ein schwaches allgemeines Stromnetzes angeschlossen ist, das beispielsweise für eine Wiederaufladung des lastwechselfesten Energiespeichers sehr lange Zeiträume benötigt. Die Energieerzeugungseinheiten unterstützen dabei die Bereitstellung von elektrischer Energie aus dem allgemeinen Stromnetz beziehungsweise die darstellen. Zumindest eine der Energieerzeugungseinheiten ist dabei am Übergabepunkt mit der AC-Stromversorgung oder am DC-Bus der Stromtankstelle verbunden.

Die Erfindung betrifft des Weiteren ein Verfahren zum Betreiben einer Stromtankstelle gemäß der vorliegenden Erfindung mit einer AC-Stromversorgung, geeignet zur parallelen Schnellaufladung einer Mehrzahl an Akkumulatoren von Elektrofahrzeugen als mobile Speicher, umfassend mindestens eine Schnellladestation, vorzugsweise mehrere Schnellladestationen, angeschlossen an die AC-Stromversorgung, die über einen Übergabepunkt mit dem allgemeinen Stromnetz verbunden ist, und mindestens einen lastwechselfesten Energiespeicher mit einer Energiespeichersteuereinheit verbunden mit mindestens einem geeigneten Mittel zur Feststellung eines Bedarfs an zusätzlicher elektrischer Energie in der AC-Stromversorgung, umfassend die Schritte
- Laden des lastwechselfesten Energiespeichers über den AC/DC-Wandler aus dem allgemeinen Stromnetz, sofern der lastwechselfeste Energiespeicher noch nicht vollständig geladen ist und kein Bedarf an zusätzlicher elektrischer Energie in der Stromtankstelle durch das geeignete Mittel festgestellt wurde, und
- Abgabe elektrischer Energie an die AC-Stromversorgung der Stromtankstelle aus dem lastwechselfesten Energiespeicher, veranlasst durch die Energiespeichersteuereinheit, so dass weder das allgemeine Stromnetz noch die AC-Stromversorgung der Stromtankstelle durch die parallelen Schnellaufladungen überlastet werden, nachdem der Bedarf an zusätzlicher elektrischer Energie durch das geeignete Mittel festgestellt und ein entsprechendes Bedarfssignal an die Energiespeichersteuereinheit übermittelt wurde. Dadurch wird selbst bei einem erhöhten Strombedarf aufgrund einer Schnellaufladung mit höherer Leistung als vom allgemeinen Stromnetz verfügbar und/oder aufgrund mehrerer gleichzeitig aufzuladener Elektrofahrzeuge (Bedarfsfall) das allgemeine Stromnetz nicht überlastet, da der Energiespeicher die über die Netzkapazität hinausgehende Leistung direkt an der Stromtankstelle bereitstellt. Dadurch wird eine parallele Schnellaufladung mehrerer Elektrofahrzeuge in wenigen Minuten ermöglicht, die ohne Abgabe elektrischer Energie an die AC-Stromversorgung der Stromtankstelle aus dem lastwechselfesten Energiespeicher nicht möglich wäre. In den Zeiträumen ohne erhöhten Strombedarf wird der Energiespeicher aus dem allgemeinen Stromnetz wieder aufgeladen, wobei die Aufladung einen längeren Zeitraum (wesentlich größer als der Zeitraum für die Aufladung der Elektrofahrzeuge) vollzogen wird. Dadurch kann der Energiespeicher ohne Überlastung des allgemeinen Stromnetzes mit der für die spätere Schnellaufladung der Elektrofahrzeuge benötigten Energie versorgt werden. Der Anschluss des Energiespeichers an das AC-Stromnetz der Stromtankstelle ermöglicht außerdem die Ausstattung jeder beliebigen Stromtankstelle mit dem lastwechselfesten Energiespeicher, ohne dass dabei die vorher vorhandene AC-Stromversorgung der Stromtankstelle modifiziert werden muss.

In einer Ausführungsform basiert das Laden des lastwechselfesten Energiespeichers auf einer Verbrauchsvorhersage oder einem vorgegebenen Profil unter Berücksichtigung des Ladezustands des lastwechselfesten Energiespeichers.

In einer weiteren Ausführungsform des Verfahrens, wobei die Stromtankstelle weitere lastwechselfeste Energiespeicher umfasst, die jeweils über einen weiteren AC/DC-Wandler mit der AC-Stromversorgung der Stromtankstelle verbunden sind, und wobei die Energiespeichersteuereinheiten der lastwechselfesten Energiespeicher über eine Lademanagementeinheit mit dem Mittel zur Feststellung des Bedarfs an zusätzlicher elektrischer Energie verbunden sind, umfasst das Verfahren die Schritte
- Auswählen einzelner oder mehrerer lastwechselfester Energiespeicher für die Speicherung elektrischer Energie aus dem allgemeinen Stromnetz durch die Lademanagementeinheit je nach Ladezustand der lastwechselfesten Energiespeicher bei fehlendem Bedarf an zusätzlicher elektrischer Energie in der AC-Stromversorgung, und
- Auswählen einzelner oder mehrerer lastwechselfester Energiespeicher für die Abgabe von elektrischer Energie an die AC-Stromversorgung und nachfolgende Ansteuerung der ausgewählten lastwechselfesten Energiespeicher durch die jeweiligen Energiespeichersteuereinheiten der lastwechselfesten Energiespeicher.

Die Verwendung mehrerer separater lastwechselfester Energiespeicher erhöht die Gesamtkapazität an gespeicherter Energie, ohne dass dafür der einzelne Energiespeicher modifiziert werden muss. Somit wird eine modulare Kapazitätsanpassung ermöglicht. Je nach Bedarf und Ladezustand der einzelnen Energiespeicher können einzelne, mehrere oder alle Energiespeicher nach entsprechender Auswahl durch die Lademanagementeinheit (z.B. durch Aussenden eines Auswahlsignals an die entsprechende mit der Lademanagementeinheit über Datenleitungen verbundene Energiespeichersteuereinheit) Energie an die AC-Stromversorgung der Stromtankstelle abgeben.

In einer Ausführungsform umfasst das Verfahren zum Umrüsten einer Stromtankstelle mit vorhandener AC-Stromversorgung, die über einen Übergabepunkt mit dem allgemeinen Stromnetz verbunden ist, auf die Stromtankstelle die zusätzlichen Schritte
- Anpassen der AC-Stromversorgung der umzurüstenden Stromtankstelle an den für die parallele Schnellaufladung zu erwartenden Gesamtstrom, sofern die vorhandene AC-Stromversorgung für diesen Gesamtstrom nicht geeignet ist,
- Anschließen des lastwechselfesten Energiespeichers mittels des AC/DC-Wandlers an die gegebenenfalls angepasste AC-Stromversorgung der umzurüstenden Stromtankstelle zur Speicherung elektrischer Energie aus dem allgemeinen Stromnetz und zur Abgabe elektrischer Energie an die AC-Stromversorgung der Stromtankstelle bei Bedarf,
- Einfügen des geeigneten Mittels, vorzugsweise umfassend ein oder mehrere Lastsensoren, zur Feststellung des Bedarfs an zusätzlicher elektrischer Energie in der umzurüstenden Stromtankstelle, und
- Verbinden des Mittels mit der Energiespeichersteuereinheit des lastwechselfesten Energiespeichers, die für die Veranlassung der Abgabe elektrischer Energie an die AC-Stromversorgung aufgrund des festgestellten Bedarfs vorgesehen ist, so dass weder das allgemeine Stromnetz noch die AC-Stromversorgung der Stromtankstelle durch die parallelen Schnellaufladungen überlastet werden.
- Anschließen des lastwechselfesten Energiespeichers mittels eines AC/DC-Wandlers an die gegebenenfalls angepasste AC-Stromversorgung der Stromtankstelle zur Speicherung elektrischer Energie aus dem allgemeinen Stromnetz und zur Abgabe elektrischer Energie an die AC-Stromversorgung der Stromtankstelle bei Bedarf,
- Einfügen eines geeigneten Mittels, vorzugsweise umfassend ein oder mehrere Lastsensoren, zur Feststellung des Bedarfs an zusätzlicher elektrischer Energie in der Stromtankstelle, und
- Verbinden des Mittels mit einer Energiespeichersteuereinheit des lastwechselfesten Energiespeichers, die für die Veranlassung der Abgabe elektrischer Energie an die AC-Stromversorgung aufgrund des festgestellten Bedarfs vorgesehen ist, so dass weder das allgemeine Stromnetz noch die AC-Stromversorgung der Stromtankstelle durch die parallelen Schnellaufladungen überlastet werden.

Bevor ein zusätzlicher Energiespeicher zur Abgabe von Energie im AC-Stromnetz der Stromtankstelle integriert wird, muss zunächst geprüft werden, ob die vorhandene AC-Stromversorgung für Ströme ausgelegt ist, die bei einer mit dem angeschlossenen Energiespeicher möglichen parallelen Schnellaufladung fließen könnten. Sofern die AC-Stromversorgung für diese zu erwartenden Ströme nicht geeignet ist, muss eine entsprechend geeignete AC-Stromversorgung zunächst installiert werden. Diese Installationsarbeiten sind allerdings auf den Bereich bis zum Übergabepunkt beschränkt, da die erhöhten Ströme nicht aus dem allgemeinen Stromnetz gezogen werden, sondern vom lastwechselfesten Energiespeicher zur Verfügung gestellt werden. Durch die Integration des lastwechselfesten Energiespeichers mittels eines AC/DC-Wandlers in die AC-Stromversorgung der Stromtankstelle können konventionelle Stromtankstellen leicht mit einem Energiespeicher zur Ermöglichung einer parallelen Schnellaufladung mehrerer Elektrofahrzeuge ohne Überlastung des allgemeinen Stromnetzes beziehungsweise ohne Anpassung des allgemeinen Stromnetzes an den erhöhen Strombedarf ausgestattet werden. Dies geschieht gegebenenfalls auf Kosten einer Modifikation des AC-Stromnetzes der Stromtankstelle. Ferner müssen lediglich die voranstehend beschriebenen Komponenten zur Steuerung des Energiespeichers in das Stromnetz der Stromtankstelle integriert werden. Das angeschlossene allgemeine Stromnetz kann dabei wie vorher weiter genutzt werden. Dadurch wird der technische Aufwand zur Umrüstung einer bereits vorhandenen Stromtankstelle in eine erfindungsgemäße Stromtankstelle gering gehalten. Außerdem wird die Umrüstung für nahezu jede Stromtankstelle technisch möglich. Die voranstehenden Verfahrensschritte zur Umrüstung in eine erfindungsgemäße Stromtankstelle können im Rahmen der vorliegenden Erfindung vom Fachmann auch in einer anderen Reihenfolge als voranstehend angegeben ausgeführt werden.

In einer Ausführungsform werden bei einer entsprechenden Bedarfsprognose die Schritte Anschließen, Einfügen und Verbinden für weitere lastwechselfeste Energiespeicher durchgeführt, die danach jeweils über einen weiteren AC/DC-Wandler mit der AC-Stromversorgung der Stromtankstelle verbunden sind. So kann jede Stromtankstelle selbst bei unterschiedlichem Strombedarf mit den für sie benötigten geeigneten Ernergiespeichern ausgerüstet werden.

### Kurze Beschreibung der Abbildungen

Diese und andere Aspekte der Erfindung werden im Detail in den Abbildungen wie folgt gezeigt.
- Fig.1:: eine Stromtankstelle gemäß dem Stand der Technik.
- Fig.2:: eine Ausführungsform der erfindungsgemäßen Stromtankstelle.
- Fig.3:: eine weitere Ausführungsform der erfindungsgemäßen Stromtankstelle mit mehreren lastwechselfesten Energiespeichern.
- Fig.4:: eine Ausführungsform des lastwechselfesten Energiespeichers als Schwungrad-Energiespeicher.
- Fig.5:: eine Ausführungsform des Verfahrens zum Betreiben einer erfindungsgemäßen Stromtankstelle.
- Fig.6:: eine Ausführungsform des Verfahrens zum Umrüsten einer konventionellen Stromtankstelle in eine erfindungsgemäße Stromtankstelle.

### Detaillierte Beschreibung der Ausführungsbeispiele

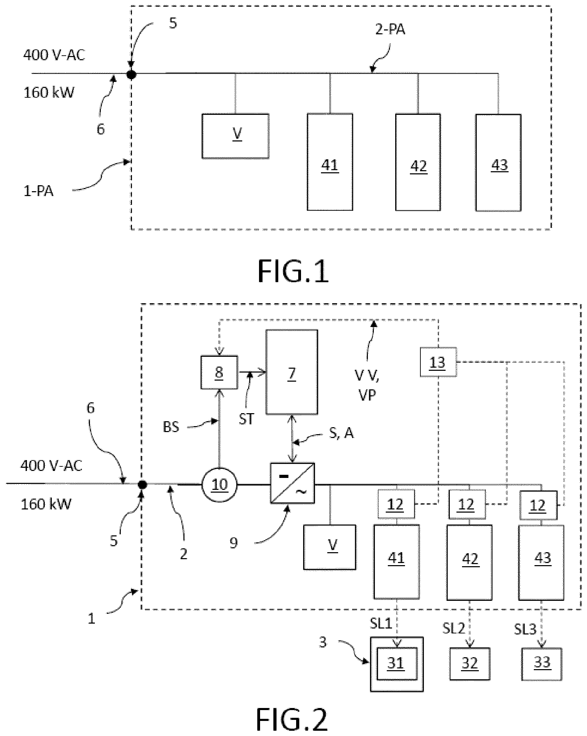

Fig. 1 zeigt eine Stromtankstelle 1-PA gemäß dem Stand der Technik, wobei die Stromtankstelle 1-PA eine AC-Stromversorgung 2-PA besitzt, die an einem Übergabepunkt 5 (beispielsweise eine Hauptsicherung) mit dem allgemeinen Stromnetz 6 mit 400 V-AC und 160 kW verbunden ist. Die Stromtankstelle 1-PA gemäß dem Stand der Technik kann dabei eine oder mehrere Ladestationen 41, 42, 43 besitzen, die gegebenenfalls auch als Schnellladestationen ausgebildet sind. Aufgrund der Netzbeschränkungen durch das allgemeinen Stromnetz 6 können die Ladestationen 41, 42, 43 bei einem hohem Ladebedarf nicht alle parallel und/oder nur mit einer limitierten Ladeleistung verwendet werden. Dies führt gerade bei einem hohen Andrang an aufzuladenen Elektrofahrzeugen an der Stromtankstelle 1-PA zu langen Ladezeiten und damit zu einer langen Wartezeit für die Elektrofahrzeuge, was ihre zeitliche Verfügbarkeit stark einschränken würde. Die Komponente V bezeichnet hier in Summe alle weiteren Stromverbraucher der Stromtankstelle 1-PA, die nicht Schnellladestationen sind, beispielsweise die Beleuchtung der Stromtankstelle und den Betrieb weiterer elektrischer Anlagen der Stromtankstelle.

Fig.2 zeigt eine Ausführungsform der erfindungsgemäßen Stromtankstelle 1 (schematisch als gestrichelt eingerahmter Bereich dargestellt) mit einer AC-Stromversorgung 2, geeignet zur parallelen Schnellaufladung SL1, SL2, SL3 einer Mehrzahl an mobilen Speichern 31, 32, 33 von Elektrofahrzeugen 3. Dazu ist die AC-Stromversorgung 2 für besonders hohe Ströme oberhalb 32 A geeignet ausgelegt. Die Stromtankstelle 1, umfassend in dieser Ausführungsform drei Schnellladestationen 41, 42, 43 angeschlossen an die AC-Stromversorgung 2, die über einen Übergabepunkt 5 mit dem allgemeinen Stromnetz 6 verbunden ist. Die Anzahl der Schnellladestationen kann in anderen Ausführungsbeispielen sehr unterschiedlich sein, beispielsweise von einer Schnellladestation bis zehn Schnellladestationen oder mehr. Zusätzlich umfasst die Stromtankstelle 1 mindestens einen lastwechselfesten Energiespeicher 7 mit einer Energiespeichersteuereinheit 8, die hier als separate Einheit angeordnet ist. In anderen Ausführungsformen kann die Energiespeichersteuereinheit 8 auch als Komponente im Energiespeicher 7 angeordnet sein. Der lastwechselfeste Energiespeicher 7 ist über einen AC/DC-Wandler 9 mit der AC-Stromversorgung 2 der Stromtankstelle 1 verbunden, damit elektrische Energie aus dem allgemeinen Stromnetz 6 gespeichert S und bei Bedarf B elektrischer Energie an die AC-Stromversorgung 2 der Stromtankstelle 1 abgegeben A werden kann. Der Bedarf B an zusätzlicher elektrischer Energie wird hier durch einen Lastsensor 10 als das geeignete Mittel 10 in der Stromtankstelle 1 festgestellt. Der Lastsensor ist hierbei zwischen AC/DC-Wandler 9 und Übergabepunkt 5 angeordnet und mittels einer Datenleitung mit der Energiespeichersteuereinheit 8 zur Übermittlung der Lastdaten verbunden. Der Lastsensor 10 ist dazu ausgestaltet, ein entsprechendes Bedarfssignal BS an die Energiespeichersteuereinheit 8 zu übermitteln, woraufhin diese nach Empfang des Bedarfssignals BS die Abgabe A von elektrischer Energie an die AC-Stromversorgung 2 über ein entsprechendes Steuersignal ST in einer Form veranlasst, dass weder das allgemeine Stromnetz 6 noch die AC-Stromversorgung 2 der Stromtankstelle 1 durch die parallelen Schnellaufladungen SL1, SL2, SL3 (gestrichelte Pfeile) überlastet werden. Die anschließende Aufladung S des Energiespeichers 7 kann dabei auf einer Verbrauchsvorhersage VV oder einem vorgegebenen Profil VP unter Berücksichtigung des Ladezustands LZ des lastwechselfesten Energiespeichers 7 basieren. Dazu werden mittels Verbrauchssensoren 12, hier jeweils ein Verbrauchssensor 12 an einer Schnellladestation 41, 42, 43, der zeitlich anfallende Verbrauch gemessen und die Daten mittels Datenleitungen an eine Auswerte- und Speichereinheit 13 zur Erstellung der Verbrauchsvorhersage VV oder des vorgegebenen Profil VP übermittelt. Die Auswerte- und Speichereinheit 13 ist hier mit der Energiespeichersteuereinheit 8 zur Übermittlung der Verbrauchsvorhersage VV oder des vorgegebenen Profil VP verbunden, damit diese dann die Aufladung S des Energiespeichers 7 entsprechend steuert. In anderen Ausführungsformen kann die Auswerte- und Speichereinheit 13 auch Teil der Energiespeichersteuereinheit 8 sein. In einer weiteren Ausführungsform kann der Lastsensor 10 gleichzeitig auch als Verbrauchssensor 12 eingesetzt werden. Die Komponente V bezeichnet hier in Summe alle weiteren Stromverbraucher der Stromtankstelle 1, die nicht Schnellladestationen sind, beispielsweise die Beleuchtung der Stromtankstelle 1 und den Betrieb weiterer elektrischer Anlagen der Stromtankstelle 1.

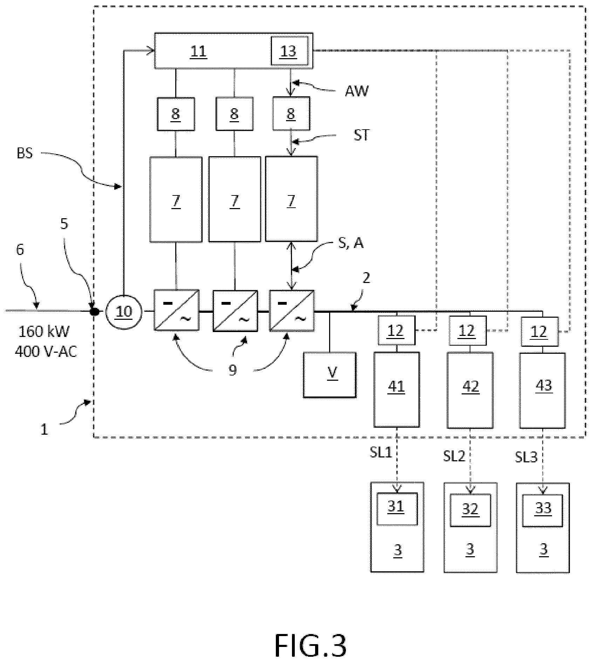

Fig.3 zeigt eine weitere Ausführungsform der erfindungsgemäßen Stromtankstelle 1 mit mehreren lastwechselfesten Energiespeichern 7. Die Schnellladestationen 41, 42, 43, das AC-Stromnetz 2, der Überganbepunkt 5, der Lastsensor 10, die Verbrauchssensoren 12, der Verbraucher V und das allgemeine Stromnetz 6 entsprechen der Ausführungsform aus Figur 2. Natürlich ist die Anzahl der Schnellladestationen 41, 42, 43 zur Aufladung von Akkumulatoren 31, 32, 33 der Elektofahrzeuge 3 in Figur 3 ebenfalls nur beispielhaft, die bei anderen erfindungsgemäßen Stromtankstellen 1 deutlich variieren kann. Die Stromtankstelle 1 umfasst in dieser Ausführungsform drei lastwechselfeste Energiespeicher 7, die jeweils über einen weiteren AC/DC-Wandler 9 mit der AC-Stromversorgung 2 der Stromtankstelle 1 zur Speicherung S elektrischer Energie aus dem allgemeinen Stromnetz 6 und zur Abgabe A elektrischer Energie an die AC-Stromversorgung 2 der Stromtankstelle 1 bei Bedarf B verbunden sind. Die Energiespeichersteuereinheiten 8 der lastwechselfesten Energiespeicher 7 sind dabei über eine Lademanagementeinheit 11 mit dem Lastsensor 10 zur Feststellung des Bedarfs B an zusätzlicher elektrischer Energie verbunden. Die Lademanagementeinheit 11 ist dafür vorgesehen, je nach Ladezustand LZ der lastwechselfesten Energiespeicher 7 einzelne, mehrere oder alle lastwechselfesten Energiespeicher 7 für die Speicherung S elektrischer Energie aus dem allgemeinen Stromnetz 6 und für die Abgabe A von elektrischer Energie an die AC-Stromversorgung 2 auszuwählen AW, die durch die jeweiligen Energiespeichersteuereinheiten 8 der lastwechselfesten Energiespeicher 7 entsprechend angesteuert ST werden. In dieser Ausführungsform hat die Lademanagementeinheit 11 nur einen einzelnen lastwechselfesten Energiespeicher 7 für die Speicherung S / Abgabe A von elektrischer Energie ausgewählt, während die anderen beiden lastwechselfesten Energiespeicher 7 im Bereitstellungsmodus (Stand-by) verweilen. Die Anzahl der hier gezeigten lastwechselfesten Energiespeicher 7 stellt nur ein Beispiel für eine Stromtankstelle 1 dar und kann je nach Auslegung der Stromtankstelle 1 und dem Andrang aufzuladener Elektrofahrzeuge 3 variieren. In dieser Ausführungsform ist des Weiteren die in Figur 2 gezeigte Auswerte- und Speichereinheit 13 hier als Komponente der Lademanagementeinheit 11 ausgebildet.

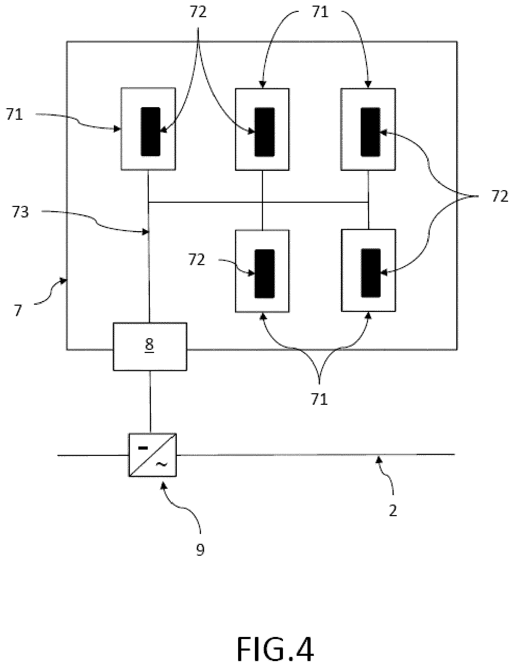

Fig.4 zeigt eine Ausführungsform des lastwechselfesten Energiespeichers 7 als Schwungrad-Energiespeicher 7. Der Schwungrad-Energiespeicher 7 ist hier mit einer Vielzahl an Speichereinheiten 71 mit jeweils einem Schwungrad 72 ausgestattet, die über einen DC-Bus 73 miteinander und über den AC/DC-Wandler 9 mit dem AC-Stromnetz 2 der Stromtankstelle 1 verbunden sind. Die Energiespeichersteuereinheit 8 ist in diesem Ausführungsbeispiel als Komponente des Schwungrad-Energiespeichers 7 ausgeführt, wobei diese Anordnung nicht auf Schwungrad-Energiespeicher 7 beschränkt ist. Der Schwungrad-Energiespeicher 7 kann außerdem so ausgeführt sein, dass die Busspannung auf dem DC-Bus 73 weitgehend unabhängig vom Ladezustand LZ des Schwungrad-Energiespeichers 7 und der Speichereinheiten 71 ist.

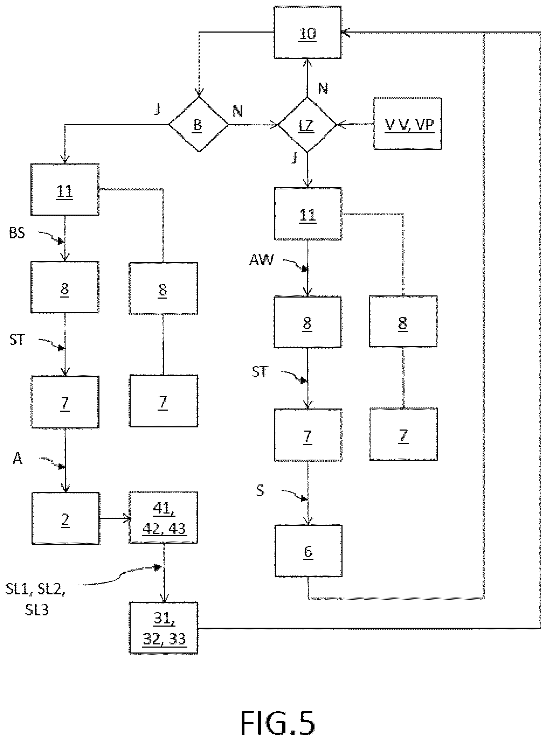

Fig.5 zeigt eine Ausführungsform des Verfahrens zum Betreiben einer erfindungsgemäßen Stromtankstelle 1. Der Lastsensor 10 stellt zunächst fest, ob ein Bedarf B an zusätzlicher elektrischer Energie in der AC-Stromversorgung 2 vorliegt. Ist das der Fall (=J), wird der Bedarf entsprechend an die Lademanagementeinheit 11 übermittelt, die ein entsprechendes Bedarfssignal BS zur Abgabe A von elektrischer Energie an die AC-Stromversorgung 2 der Stromtankstelle 1 aus dem ausgewählten lastwechselfesten Energiespeicher 7 an die entsprechende Energiespeichersteuereinheit 8 übermittelt, die daraufhin die Abgabe A von elektrischer Energie an die AC-Stromversorgung 2 veranlasst. Damit wird trotz ausgeführter Schnellaufladungen SL1, SL2, SL3 weder das allgemeine Stromnetz 6 noch die AC-Stromversorgung 2 der Stromtankstelle 1 überlastet. Wird dagegen kein Bedarf an elektrischer Energie (Fall = N) durch den Lastsensor 10 festgestellt und ist der lastwechselfeste Energiespeicher 7 noch nicht vollständig geladen (Prüfung Ladezustand = J), so wird der lastwechselfeste Energiespeicher 7 über den AC/DC-Wandler 9 aus dem allgemeinen Stromnetz 6 geladen. Dazu wählt die Lademanagementeinheit 11 den zu ladenden lastwechselfesten Energiespeicher 7 gemäß der Verbrauchsvorhersage VV oder des vorgegebenen Profils VP zum Laden des Energiespeichers 7 aus AW, dessen Energiespeichersteuereinheit 8 mittels eines entsprechenden Steuersignals ST die Speicherung S von elektrischer Energie in dem Energiespeichers 7 aus dem allgemeinen Stromnetz 6 veranlasst. Periodisch oder kontinuierlich übermittelt der Lastsensor 10 erneut den vorhandenen oder nicht vorhandenen Bedarf B an die Lademanagementeinheit 11, wonach die voranstehend beschriebenen Schritte erneut durchlaufen werden. In einer Ausführungsform mit nur einem Energiespeicher 7 können die Schritte der Lademanagementeinheit 11 auch durch die Energiespeichersteuereinheit 8 selber übernommen werden, wobei aufgrund eines einzelnen Energiespeichers 7 keine Auswahl AW zu treffen ist, wobei in dieser Ausführungsform auch gegebenenfalls auf die Lademanagementeinheit 11 verzichtet werden kann.

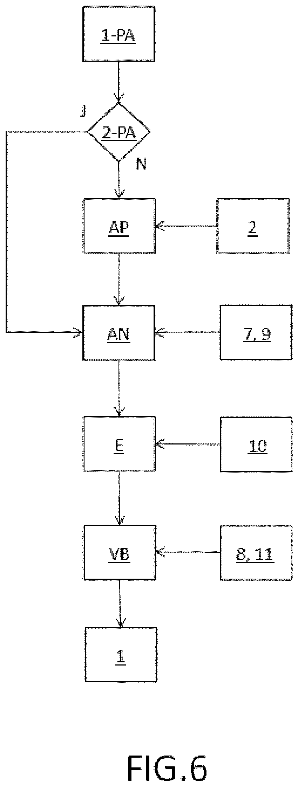

Fig.6 zeigt eine Ausführungsform des Verfahrens zum Umrüsten einer konventionellen Stromtankstelle 1-PA in eine erfindungsgemäße Stromtankstelle 1. Die Stromtankstelle 1-PA besitzt eine AC-Stromversorgung 2-PA, die über einen Übergabepunkt 5 mit dem allgemeinen Stromnetz 6 verbunden ist. Zunächst wird geprüft, ob die AC-Stromversorgung 2-PA für den Transport höherer Ströme beim Betrieb als erfindungsgemäße Stromtankstelle 1 mit ein oder mehreren Schnellladestationen 41, 42, 43 geeignet ist. Ist dies nicht der Fall (=N), wird die AC-Stromversorgung 2-PA der Stromtankstelle 1-PA an den für die parallele Schnellaufladung SL1, SL2, SL3 zu erwartenden Gesamtstrom angepasst AP. Ist die vorhandene AC-Stromversorgung 2-PA für diesen Gesamtstrom geeignet und stellt damit bereits eine AC-Stromversorgung 2 dar, so wird dieser Schritt übersprungen. Danach (oder alternativ parallel oder vor der Anspassung der AC-Stromversorgung) wird der lastwechselfeste Energiespeicher 7 mittels eines AC/DC-Wandlers 9 an die gegebenenfalls angepasste AC-Stromversorgung 2 der Stromtankstelle 1-PA zur Speicherung S elektrischer Energie aus dem allgemeinen Stromnetz 6 und zur Abgabe A elektrischer Energie an die AC-Stromversorgung 2 der Stromtankstelle 1 angeschlossen AN. Außerdem wird ein geeignetes Mittel 10, vorzugsweise umfassend ein oder mehrere Lastsensoren, zur Feststellung des Bedarfs B an zusätzlicher elektrischer Energie in der Stromtankstelle 1-PA eingefügt E, und das Mittel 10 mit einer Energiespeichersteuereinheit 8 des lastwechselfesten Energiespeichers 7 für die Veranlassung der Abgabe A elektrischer Energie an die AC-Stromversorgung 2 aufgrund des festgestellten Bedarfs B verbunden VB. Gegebenenfalls werden bei einer entsprechenden Bedarfsprognose die Schritte des Anschließens AN, des Einfügens E und des Verbindens VB für weitere lastwechselfeste Energiespeicher 7 wiederholt, die danach jeweils über einen weiteren AC/DC-Wandler 9 mit der AC-Stromversorgung 2 der Stromtankstelle 1 verbunden sind. Je nach Ausführungsform werden zusätzlich zwischen Lastsensor(en) 10 und Energiespeichersteuereinheit(en) 8 eine oder mehrere Lademanagementeinheiten 11 zur Auswahl der Energiespeicher 7 für Speicherung S oder Abgabe A von elektrischer Energie installiert. Nach Ausführung obiger Verfahrensschritte ist die vorherige Stromtankstelle 1-PA in eine erfindungsgemäße Stromtankstelle 1 mit begrenztem technischem Aufwand umgerüstet. Diese umgerüstete Stromtankstelle kann bei Bedarf mit zusätzlichen Energiespeichern 7 und/oder zusätzlichen Schnellladestationen entsprechend erweitert werden.

Die hier gezeigten Ausführungsformen stellen nur Beispiele für die vorliegende Erfindung dar und dürfen daher nicht einschränkend verstanden werden. Alternative durch den Fachmann in Erwägung gezogene Ausführungsformen sind gleichermaßen vom Schutzbereich der vorliegenden Erfindung umfasst.

### Liste der Bezugszeichen

- 1: erfindungsgemäße Stromtankstelle
- 1-PA: Stromtankstelle gemäß Stand der Technik
- 2: AC-Stromversorgung in der Stromtankstelle
- 2-PA: AC-Stromversorgung in der Stromtankstelle gemäß Stand der Technik
- 3: Elektrofahrzeug
- 31, 32, 33: mobiler Speicher
- 41, 42, 43: Schnellladestation
- 5: Hauptsicherung
- 6: allgemeines Stromnetz (z.B. 400V, 160 kW)
- 7: lastwechselfreier Energiespeicher
- 71: Speichereinheit des Energiespeichers
- 72: Schwungrad in der Speichereinheit
- 73: DC-Bus im Energiespeicher
- 8: Energiespeichersteuereinheit
- 9: AC/DC-Wandler
- 10: Mittel zur Feststellung eines Bedarfs an zusätzlicher elektrischer Energie
- 11: Lademanagementeinheit
- 12: Verbrauchssensor zur Messung des Stromverbrauchs
- 13: Auswerte- und Speichereinheit für die Verbrauchsaufzeichnung
- A: Abgabe elektrischer Energie in AC-Stromversorgung in der Stromtankstelle
- AP: Anpassen der AC-Stromversorgung der Stromtankstelle an höhere Ströme
- AN: Anschließen des Energiespeichers 7 an die AC-Stromversorgung
- AW: Auswählen einzelner / mehrerer Energiespeiecher 7 zur Speicherung / Abgabe von elektrischer Energie
- B: Bedarf an zusätzlicher elektrischer Energie
- BS: Bedarfssignal
- E: Einfügen des Mittels 10 in die AC-Stromversorgung
- LZ: Ladezustand
- S: Speicherung elektrischer Energie aus dem allgemeinen Stromnetz
- SL1, SL2, SL3: Schnellaufladungen
- ST: (An)Steuern des Energiespeichers durch Energiespeichersteuereinheit
- V: sonstige elektrische Verbraucher der Stromtankstelle
- VB: Verbinden des Mittels 10 mit der Energiespeichersteuereinheit 8
- VP: vorgegebenes Profil
- VV: Verbrauchsvorhersage

## Patentansprüche

1. Eine Stromtankstelle (1) mit einer AC-Stromversorgung (2), geeignet zur parallelen Schnellaufladung (SL1, SL2, SL3) einer Mehrzahl an Akkumulatoren von Elektrofahrzeugen als mobile Speicher (31, 32, 33), umfassend mindestens eine Schnellladestation (41), angeschlossen an die AC-Stromversorgung (2), die über einen Übergabepunkt (5) mit dem allgemeinen Stromnetz (6) verbunden ist, und mindestens einen Energiespeicher (7) mit einer Energiespeichersteuereinheit (8),
**dadurch gekennzeichnet,**
**dass** der mindestens eine Energiespeicher lastwechselfest ist, und dass der lastwechselfeste Energiespeicher (7) über einen AC/DC-Wandler (9) mit der AC-Stromversorgung (2) der Stromtankstelle (1) zur Speicherung (S) elektrischer Energie aus dem allgemeinen Stromnetz (6) und zur Abgabe (A) elektrischer Energie an die AC-Stromversorgung (2) der Stromtankstelle (1) bei Bedarf (B) verbunden ist, wobei der Bedarf (B) an zusätzlicher elektrischer Energie durch mindestens ein geeignetes Mittel (10) in der Stromtankstelle (1) festgestellt wird und das Mittel (10) dazu ausgestaltet ist, ein entsprechendes Bedarfssignal (BS) an die Energiespeichersteuereinheit (8) zu übermitteln, die dazu vorgesehen ist, nach Empfang des Bedarfssignals (BS) die Abgabe (A) von elektrischer Energie an die AC-Stromversorgung (2) so zu veranlassen, dass weder das allgemeine Stromnetz (6) noch die AC-Stromversorgung (2) der Stromtankstelle (1) durch die parallelen Schnellaufladungen (SL1, SL2, SL3) überlastet werden.

2. Die Stromtankstelle (1) nach Anspruch 1,
**dadurch gekennzeichnet,**
**dass** die Stromtankstelle (1) mehrere Schnellladestationen (41, 42, 43) umfasst, die parallel zueinander in der AC-Stromversorgung (2) angeordnet sind.

3. Die Stromtankstelle (1) nach Anspruch 1 oder 2,
**dadurch gekennzeichnet,**
**dass** als geeignetes Mittel (10) zur Feststellung des Bedarfs (B) an zusätzlicher elektrischer Energie ein oder mehrere Lastsensoren (10) zumindest in der AC-Stromversorgung (2) der Stromtankstelle (1) vor dem Übergabepunkt (5) angeordnet sind.

4. Die Stromtankstelle (1) nach einem der vorangehenden Ansprüchen,
**dadurch gekennzeichnet,**
**dass** die Energiespeichersteuereinheit (8) den lastwechselfesten Energiespeicher (7) basierend auf einer Verbrauchsvorhersage (W) oder einem vorgegebenen Profil (VP) unter Berücksichtigung des Ladezustands (LZ) des lastwechselfesten Energiespeichers (7) aus dem allgemeinen Stromnetz (6) auflädt.

5. Die Stromtankstelle (1) nach einem der voranstehenden Ansprüche,
**dadurch gekennzeichnet,**
**dass** der lastwechselfeste Energiespeicher (7) ein Schwungrad-Energiespeicher (7) mit einer Vielzahl an Speichereinheiten (71) mit jeweils einem Schwungrad (72) ist, wobei die Speichereinheiten (71) über einen DC-Bus (73) miteinander und über den AC/DC-Wandler (9) mit dem AC-Stromnetz (2) der Stromtankstelle (1) verbunden sind.

6. Die Stromtankstelle (1) nach Anspruch 5,
**dadurch gekennzeichnet,**
**dass** der Schwungrad-Energiespeicher (7) so ausgeführt ist, dass die Busspannung auf dem DC-Bus (73) weitgehend unabhängig vom Ladezustand (LZ) des Schwungrad-Energiespeichers (7), insbesondere der Speichereinheiten (71), ist.

7. Die Stromtankstelle (1) nach einem der voranstehenden Ansprüche,
**dadurch gekennzeichnet,**
**dass** die Stromtankstelle (1) weitere lastwechselfeste Energiespeicher (7) umfasst, die jeweils über einen weiteren AC/DC-Wandler (9) mit der AC-Stromversorgung (2) der Stromtankstelle (1) zur Speicherung (S) elektrischer Energie aus dem allgemeinen Stromnetz (6) und zur Abgabe (A) elektrischer Energie an die AC-Stromversorgung (2) der Stromtankstelle (1) bei Bedarf (B) verbunden sind.

8. Die Stromtankstelle (1) nach Anspruch 7,
**dadurch gekennzeichnet,**
**dass** die Energiespeichersteuereinheiten (8) der lastwechselfesten Energiespeicher (7) über eine Lademanagementeinheit (11) mit dem Mittel (10) zur Feststellung des Bedarfs (B) an zusätzlicher elektrischer Energie verbunden sind und dass die Lademanagementeinheit (11) je nach Ladezustand (LZ) der lastwechselfesten Energiespeicher (7) einzelne oder mehrere lastwechselfeste Energiespeicher (7) für die Speicherung (S) elektrischer Energie aus dem allgemeinen Stromnetz (6) und für die Abgabe (A) von elektrischer Energie an die AC-Stromversorgung (2) auswählt (AW) und die jeweiligen Energiespeichersteuereinheiten (8) der lastwechselfesten Energiespeicher (7) entsprechend ansteuert.

9. Die Stromtankstelle (1) nach einem der voranstehenden Ansprüche,
**dadurch gekennzeichnet,**
**dass** die Stromtankstelle ein oder mehrere Energieerzeugungseinheiten umfasst, die so angeordnet sind, dass sie je nach Art des erzeugten Stroms den Strom vor oder hinter dem AC/DC Wandler in die Stromtankstelle einspeisen.

10. Ein Verfahren zum Betreiben einer Stromtankstelle (1) nach Anspruch 1 mit einer AC-Stromversorgung (2), geeignet zur parallelen Schnellaufladung (SL1, SL2, SL3) einer Mehrzahl an Akkumulatoren von Elektrofahrzeugen als mobile Speicher (31, 32, 33), umfassend mindestens eine Schnellladestation (41, 42, 43), angeschlossen an die AC-Stromversorgung (2), die über einen Übergabepunkt (5) mit dem allgemeinen Stromnetz (6) verbunden ist, und mindestens einen lastwechselfesten Energiespeicher (7) mit einer Energiespeichersteuereinheit (8) verbunden mit mindestens einem geeigneten Mittel (10) zur Feststellung eines Bedarfs (B) an zusätzlicher elektrischer Energie in der AC-Stromversorgung (2), umfassend die Schritte
- Laden (S) des lastwechselfesten Energiespeichers (7) über den AC/DC-Wandler (9) aus dem allgemeinen Stromnetz (6), sofern der lastwechselfeste Energiespeicher (7) noch nicht vollständig geladen ist und kein Bedarf (B) an zusätzlicher elektrischer Energie in der Stromtankstelle (1) durch das geeignete Mittel (10) festgestellt wurde, und
- Abgabe (A) elektrischer Energie an die AC-Stromversorgung (2) der Stromtankstelle (1) aus dem lastwechselfesten Energiespeicher (7) veranlasst durch die Energiespeichersteuereinheit (8), so dass weder das allgemeine Stromnetz (6) noch die AC-Stromversorgung (2) der Stromtankstelle (1) durch die parallelen Schnellaufladungen (SL1, SL2, SL3) überlastet werden, nachdem der Bedarf (B) an zusätzlicher elektrischer Energie durch das geeignete Mittel (10) festgestellt und ein entsprechendes Bedarfssignal (BS) an die Energiespeichersteuereinheit (8) übermittelt wurde.

11. Das Verfahren nach Anspruch 10,
**dadurch gekennzeichnet,**
**dass** das Laden (S) des lastwechselfesten Energiespeichers (7) auf einer Verbrauchsvorhersage (W) oder einem vorgegebenen Profil (VP) unter Berücksichtigung des Ladezustands (LZ) des lastwechselfesten Energiespeichers (7) basiert.

12. Das Verfahren nach Anspruch 10 oder 11, wobei die Stromtankstelle (1) weitere lastwechselfeste Energiespeicher (7) umfasst, die jeweils über einen weiteren AC/DC-Wandler (9) mit der AC-Stromversorgung (2) der Stromtankstelle (1) verbunden sind, und wobei die Energiespeichersteuereinheiten (8) der lastwechselfesten Energiespeicher (7) über eine Lademanagementeinheit (11) mit dem Mittel (10) zur Feststellung des Bedarfs (B) an zusätzlicher elektrischer Energie verbunden sind, umfassend die Schritte
- Auswählen (AW) einzelner oder mehrerer lastwechselfester Energiespeicher (7) für die Speicherung (S) elektrischer Energie aus dem allgemeinen Stromnetz (6) durch die Lademanagementeinheit (11) je nach Ladezustand (LZ) der lastwechselfesten Energiespeicher (7) bei fehlendem Bedarf (B) an zusätzlicher elektrischer Energie in der AC-Stromversorgung (2), und
- Auswählen (AW) einzelner oder mehrerer lastwechselfester Energiespeicher (7) für die Abgabe (A) von elektrischer Energie an die AC-Stromversorgung (2) und nachfolgende Ansteuerung (ST) der ausgewählten lastwechselfesten Energiespeicher (7) durch die jeweiligen Energiespeichersteuereinheiten (8) der lastwechselfesten Energiespeicher (7).

13. Ein Verfahren nach Anspruch 10, wobei das Verfahren zum Umrüsten einer Stromtankstelle (1-PA) mit vorhandener AC-Stromversorgung, die über einen Übergabepunkt (5) mit dem allgemeinen Stromnetz (6) verbunden ist, in die Stromtankstelle (1) die zusätzlichen Schritte umfasst
- Anpassen (AP) der AC-Stromversorgung (2-PA) der umzurüstenden Stromtankstelle (1-PA) an den für die parallele Schnellaufladung (SL1, SL2, SL3) zu erwartenden Gesamtstrom, sofern die vorhandene AC-Stromversorgung (2-PA) für diesen Gesamtstrom nicht geeignet ist,
- Anschließen (AN) des lastwechselfesten Energiespeichers (7) mittels des AC/DC-Wandlers (9) an die gegebenenfalls angepasste AC-Stromversorgung (2) der umzurüstenden Stromtankstelle (1-PA) zur Speicherung (S) elektrischer Energie aus dem allgemeinen Stromnetz (6) und zur Abgabe (A) elektrischer Energie an die AC-Stromversorgung (2) der Stromtankstelle (1) bei Bedarf (B),
- Einfügen (E) des geeigneten Mittels (10), vorzugsweise umfassend ein oder mehrere Lastsensoren, zur Feststellung des Bedarfs (B) an zusätzlicher elektrischer Energie in der umzurüstenden Stromtankstelle (1-PA), und
- Verbinden (VB) des Mittels (10) mit der Energiespeichersteuereinheit (8) des lastwechselfesten Energiespeichers (7), die für die Veranlassung der Abgabe (A) elektrischer Energie an die AC-Stromversorgung (2) aufgrund des festgestellten Bedarfs (B) vorgesehen ist, so dass weder das allgemeine Stromnetz (6) noch die AC-Stromversorgung (2) der Stromtankstelle (1) durch die parallelen Schnellaufladungen (SL1, SL2. SL3) überlastet werden.

14. Das Verfahren nach Anspruch 13,
**dadurch gekennzeichnet,**
**dass** bei einer entsprechenden Bedarfsprognose die Schritte Anschließen (AN), Einfügen (E) und Verbinden (VB) für weitere lastwechselfeste Energiespeicher (7) durchgeführt werden, die danach jeweils über einen weiteren AC/DC-Wandler (9) mit der AC-Stromversorgung (2) der Stromtankstelle (1) verbunden sind.

## Claims

1. Electric-vehicle charging facility (1) having an AC power supply (2), suitable for the parallel fast charging (SL1, SL2, SL3) of a plurality of accumulators of electric vehicles as mobile storage devices (31, 32, 33), comprising at least one fast-charging station (41), connected to the AC power supply (2) that is connected via a transfer point (5) to the general power grid (6), and comprising at least one energy-storage device (7) having an energy-storage device control unit (8),
**characterized in that**
the at least one energy-storage device is load-cycling-resistant, and **in that** the load-cycling resistant energy storage device (7) is connected via an AC/DC transformer (9) to the AC power supply (2) of the electric-vehicle charging facility (1) in order to store (S) electric energy from the general power grid (6) and in order to deliver (A) electric energy to the AC power supply (2) of the electric-vehicle charging facility (1) according to a demand (B), wherein the demand (B) for additional electric energy is determined by at least one suitable means (10) in the electric-vehicle charging facility (1), and this means (10) is configured to transmit a corresponding demand signal (BS) to the energy-storage device control unit (8) which is provided to initiate the delivery of electric energy to the AC power supply (2), after the demand signal (BS) has been received, in such a way that neither the general power grid (6) nor the AC power supply (2) of the electric-vehicle charging facility (1) is overloaded by the parallel fast charging operations (SL1, SL2, SL3).

2. Electric-vehicle charging facility (1) according to claim 1,
**characterized in that**
the electric-vehicle charging facility (1) comprises multiple fast-charging stations (41, 42, 43) that are arranged parallel to each other in the AC power supply (2).

3. Electric-vehicle charging facility (1) according to claim 1 or 2,
**characterized in that**
one or more load sensors (10) are arranged at least in the AC power supply (2) of the electric-vehicle charging facility (1) upstream from the transfer point (5), as the suitable means (10) for determining the demand (B) for additional electric energy.

4. Electric-vehicle charging facility (1) according to any one of the preceding claims,
**characterized in that**
the energy-storage device control unit (8) charges the load-cycling-resistant energy-storage device (7) from the general power grid (6) on the basis of a consumption prediction (W) or on the basis of a prescribed profile (VP), taking into account the charging state (LZ) of the load-cycling-resistant energy-storage device (7).

5. Electric-vehicle charging facility (1) according to any one of the preceding claims,
**characterized in that**
the load-cycling-resistant energy-storage device (7) is a flywheel energy-storage device (7) having multiple storage units (71), each having a flywheel (72), wherein the storage units (71) are connected to each other via a DC bus (73), and to the AC power supply (2) of the electric-vehicle charging facility (1) via the AC/DC transformer (9).

6. Electric-vehicle charging facility (1) according to claim 5,
**characterized in that**
the flywheel energy-storage device (7) is configured in such a way that the bus voltage on the DC bus (73) is largely independent of the charging state (LZ) of the flywheel energy-storage device (7), in particular of the storage units (71).

7. Electric-vehicle charging facility (1) according to any one of the preceding claims,
**characterized in that**
the electric-vehicle charging facility (1) comprises further load-cycling-resistant energy-storage devices (7) that are each connected via a further AC/DC transformer (9) to the AC power supply (2) of the electric-vehicle charging facility (1) in order to store (S) electric energy drawn from the general power grid (6) and in order to deliver (A) electric energy to the AC power supply (2) of the electric-vehicle charging facility (1) according to the demand (B).

8. Electric-vehicle charging facility (1) according to claim 7,
**characterized in that**
the energy-storage device control units (8) of the load-cycling-resistant energy-storage devices (7) are connected via a charge management unit (11) to the means (10) for determining the demand (B) for additional electric energy, and **in that**, depending on the charging state (LZ) of the load-cycling-resistant energy-storage devices (7), the charge management unit (11) selects (AW) one or multiple load-cycling-resistant energy-storage devices (7) for the storage (S) of electric energy drawn from the general power grid (6) and for the delivery (A) of electric energy to the AC power supply (2), and actuates the respective energy-storage device control units (8) of the load-cycling-resistant energy-storage devices (7) accordingly.

9. Electric-vehicle charging facility (1) according to any one of the preceding claims,
**characterized in that**
the electric-vehicle charging facility comprises one or more energy generation units that are arranged in such a way that, depending on the type of current generated, they feed the current into the electric-vehicle charging facility either upstream or downstream from the AC/DC transformer.

10. Method for operating an electric-vehicle charging facility (1) according to claim 1, having an AC power supply (2), suitable for the parallel fast charging (SL1, SL2, SL3) of a plurality of accumulators of electric vehicles as mobile storage devices (31, 32, 33), comprising at least one fast-charging station (41, 42, 43), connected to the AC power supply (2), that is connected to the general power grid (6) via a transfer point (5), and comprising at least one load-cycling-resistant energy-storage device (7) having an energy storage device control unit (8) connected to at least one suitable means (10) for determining the demand (B) for additional electric energy in the AC power supply (2), comprising the steps:
charging (S) the load-cycling-resistant energy-storage device (7) via the AC/DC transformer (9) from the general power grid (6) if the load-cycling-resistant energy-storage device (7) is not yet fully charged and if no demand (B) for additional electric energy in the electric-vehicle charging facility (1) was determined by the suitable means (10), and
- delivering (A) of electric energy to the AC power supply (2) of the electric-vehicle charging facility (1) from the load-cycling-resistant energy-storage device (7), initiated by the energy-storage device control unit (8), so that neither the general power grid (6) nor the AC power supply (2) of the electric-vehicle charging facility (1) is overloaded by the parallel fast-charging operations (SL1, SL2, SL3) once the demand (B) for additional electric energy has been determined by the suitable means (10) and a corresponding demand signal (BS) has been sent to the energy-storage device control unit (8).

11. Method according to claim 10,
**characterized in that**
the charging (S) of the load-cycling-resistant energy-storage device (7) is based on a consumption prediction(W) or on a predetermined profile (VP), taking into account the charging state (LZ) of the load-cycling-resistant energy-storage device (7).

12. Method according to claim 10 or 11, wherein the electric-vehicle charging facility (1) comprises further load-cycling-resistant energy-storage devices (7) that are each connected via a further AC/DC transformer (9) to the AC power supply (2) of the electric-vehicle charging facility (1), and wherein the energy-storage device control units (8) of the load-cycling-resistant energy-storage devices (7) are connected via a charge management unit (11) to the means (10) for determining the demand (B) for additional electric energy, comprising the following steps:
- selecting one or multiple load-cycling-resistant energy-storage devices (7) for the storage (S) of electric energy drawn from the general power grid (6) by the charge management unit (11), depending on the charging state (LZ) of the load-cycling-resistant energy-storage devices (7) in the absence of a demand (B) for additional electric energy in the AC power supply (2), and
- selecting (AW) one or multiple load-cycling-resistant energy-storage devices (7) for the delivery (A) of electric energy to the AC power supply (2), and subsequently actuating (ST) the selected load-cycling-resistant energy-storage devices (7) by the respective energy-storage device control units (8) of the load-cycling-resistant energy-storage devices (7).

13. Method according to claim 10, wherein, for retrofitting an electric-vehicle charging facility (1-PA) having an existing AC power supply that is connected to the general power grid (6) via a transfer point (5) into the electric-vehicle charging facility (1), the method comprises the additional steps of:
- adapting (AP) of the AC power supply (2-PA) of the electric-vehicle charging facility (1-PA) to the total current that can be anticipated for the parallel fast charging (SL1, SL2, SL3), if the existing AC power supply (2-PA) is not suitable for this total current,
- connecting (AN) the load-cycling-resistant energy-storage device by means of the AC/DC transformer (9) to the possibly adapted AC power supply (2) of the electric-vehicle charging facility (1-PA) to be retrofitted order to store (S) electric energy drawn from the general power grid (6) and in order to deliver (A) electric energy to the AC power supply (2) of the electric-vehicle charging facility (1) according to a demand (B),
- incorporating (E) the suitable means (10), preferably comprising one or more load sensors, for determining the demand (B) for additional electric energy into the electric-vehicle charging facility (1-PA), and
- connecting (VB) the means (10) an energy-storage device control unit (8) of the load-cycling-resistant energy-storage device (7) that is provided to initiate the delivery (A) of electric energy to the AC power supply (2) on the basis of the determined demand (B), so that neither the general power grid (6) nor the AC power supply (2) of the electric-vehicle charging facility (1) is overloaded by the parallel fast-charging operations (SL1, SL2, SL3).

14. Method according to claim 13,
**characterized in that**
on the basis of a corresponding demand prognosis, the steps of connecting (AN), incorporating (E) and connecting (VB) are carried out for further load-cycling-resistant energy-storage devices (7) that are then each connected via a further AC/DC transformer (9) to the AC power supply (2) of the electric-vehicle charging facility (1).

## Revendications

1. Station-service électrique (1) avec une alimentation en courant AC (2), adaptée pour la recharge rapide (SL1, SL2, SL3) parallèle d'une multitude d'accumulateurs de véhicules électriques en tant qu'accumulateurs mobiles (31, 32, 33), comprenant au moins une station de charge rapide (41), raccordée à l'alimentation en courant AC (2), qui est reliée par l'intermédiaire d'un point de desserte (5) au réseau électrique (6) général, et au moins un accumulateur d'énergie (7) avec une unité de commande d'accumulateur d'énergie (8),
**caractérisée en ce**
**que** l'au moins un accumulateur d'énergie est résistant aux variations de charge, et que l'accumulateur d'énergie (7) résistant aux variations de charge est relié si besoin (B) par l'intermédiaire d'un convertisseur AC/DC (9) à l'alimentation en courant AC (2) de la station-service électrique (1) aux fins du stockage (S) d'énergie électrique provenant du réseau électrique (6) général et aux fins de la distribution (A) d'énergie électrique à l'alimentation en courant AC (2) de la station-service électrique (1), dans laquelle le besoin (B) en énergie électrique supplémentaire est constaté par au moins un moyen (10) adapté dans la station-service électrique (1) et le moyen (10) est configuré pour transmettre un signal de besoin (BS) correspondant à l'unité de commande d'accumulateur d'énergie (8), qui est prévue pour entraîner, à réception du signal de besoin (BS), la distribution (A) d'énergie électrique à l'alimentation en courant AC (2) de telle sorte que ni le réseau électrique (6) général ni l'alimentation en courant AC (2) de la station-service électrique (1) ne sont soumis à une surcharge par les recharges rapides (SL1, SL2, SL3) parallèles.

2. Station-service électrique (1) selon la revendication 1,
**caractérisée en ce**
**que** la station-service électrique (1) comprend plusieurs stations de charge rapide (41, 42, 43), qui sont disposées de manière parallèle les unes par rapport aux autres dans l'alimentation en courant AC (2).

3. Station-service électrique (1) selon la revendication 1 ou 2,
**caractérisée en ce**
**qu'**un ou plusieurs capteurs de charge (10) sont disposés au moins dans l'alimentation en courant AC (2) de la station-service électrique (1) avant le point de desserte (5) en tant que moyen (10) adapté servant à constater le besoin (B) en énergie électrique supplémentaire.

4. Station-service électrique (1) selon l'une quelconque des revendications précédentes,
**caractérisée en ce**
**que** l'unité de commande d'accumulateur d'énergie (8) recharge à partir du réseau électrique (6) général l'accumulateur d'énergie (7) résistant aux variations de charge sur la base d'une prévision de consommation (W) ou d'un profil prédéfini (VP) en tenant compte de l'état de charge (LZ) de l'accumulateur d'énergie (7) résistant aux variations de charge.

5. Station-service électrique (1) selon l'une quelconque des revendications précédentes,
**caractérisée en ce**
**que** l'accumulateur d'énergie (7) résistant aux variations de charge est un accumulateur d'énergie (7) à volant d'inertie avec une pluralité d'unités d'accumulateur (71) avec respectivement un volant d'inertie (72), dans laquelle les unités d'accumulateur (71) sont reliées par l'intermédiaire d'un bus DC (73) entre elles et par l'intermédiaire du convertisseur AC/DC (9) au réseau électrique AC (2) de la station-service électrique (1).

6. Station-service électrique (1) selon la revendication 5,
**caractérisée en ce**
**que** l'accumulateur d'énergie (7) à volant d'inertie est réalisé de telle sorte que la tension de bus sur le bus DC (73) ne dépend pas dans une large mesure de l'état de charge (LZ) de l'accumulateur d'énergie (7) à volant d'inertie, en particulier des unités d'accumulateur (71).

7. Station-service électrique (1) selon l'une quelconque des revendications précédentes,
**caractérisée en ce**
**que** la station-service électrique (1) comprend d'autres accumulateurs d'énergie (7) résistants aux variations de charge, qui sont reliés si besoin (B) respectivement par l'intermédiaire d'un autre convertisseur AC/DC (9) à l'alimentation en courant AC (2) de la station-service électrique (1) aux fins du stockage (S) d'énergie électrique provenant du réseau électrique (6) général et aux fins de la distribution (A) d'énergie électrique à l'alimentation en courant AC (2) de la station-service électrique (1).

8. Station-service électrique (1) selon la revendication 7,
**caractérisée en ce**
**que** les unités de commande d'accumulateur d'énergie (8) des accumulateurs d'énergie (7) résistants aux variations de charge sont reliées par l'intermédiaire d'une unité de gestion de charge (11) au moyen (10) servant à constater le besoin (B) en énergie électrique supplémentaire, et que l'unité de gestion de charge (11) sélectionne (AW) selon l'état de charge (LZ) des accumulateurs d'énergie (7) résistant aux variations de charge divers ou plusieurs accumulateurs d'énergie (7) résistants aux variations de charge pour le stockage (S) d'énergie électrique provenant du réseau électrique (6) général et pour la distribution (A) d'énergie électrique à l'alimentation en courant AC (2) et pilote de manière correspondante les unités de commande d'accumulateur d'énergie (8) respectives des accumulateurs d'énergie (7) résistants aux variations de charge.

9. Station-service électrique (1) selon l'une quelconque des revendications précédentes,
**caractérisée en ce**
**que** la station-service électrique comprend une ou plusieurs unités de production d'énergie, qui sont disposées de telle sorte qu'elles injectent, selon le type du courant produit, le courant avant ou après le convertisseur AC/DC dans la station-service électrique.

10. Procédé servant à faire fonctionner une station-service électrique (1) selon la revendication 1 avec une alimentation en courant AC (2), adaptée pour la recharge rapide (SL1, SL2, SL3) parallèle d'une multitude d'accumulateurs de véhicules électriques en tant qu'accumulateurs mobiles (31, 32, 33), comprenant au moins une station de charge rapide (41, 42, 43), raccordée à l'alimentation en courant AC (2), qui est reliée par l'intermédiaire d'un point de desserte (5) au réseau électrique (6) général, et au moins un accumulateur d'énergie (7) résistant aux variations de charge avec une unité de commande d'accumulateur d'énergie (8) reliée à au moins un moyen (10) adapté servant à constater un besoin (B) en énergie électrique supplémentaire dans l'alimentation en courant AC (2), comprenant les étapes de
- charge (S) de l'accumulateur d'énergie (7) résistant aux variations de charge par l'intermédiaire du convertisseur AC/DC (9) depuis le réseau électrique (6) général dans la mesure où l'accumulateur d'énergie (7) résistant aux variations de charge n'est pas encore totalement chargé et qu'aucun besoin (B) en énergie électrique supplémentaire n'a été constaté par le moyen (10) adapté dans la station-service électrique (1), et
- distribution (A) d'énergie électrique à l'alimentation en courant AC (2) de la station-service électrique (1) depuis l'accumulateur d'énergie (7) résistant aux variations de charge, entraînée par l'unité de commande d'accumulateur d'énergie (8) si bien que ni le réseau électrique (6) général ni l'alimentation en courant AC (2) de la station-service électrique (1) ne sont soumis à une surcharge par les recharges rapides (SL1, SL2, SL3) parallèles après que le besoin (B) en énergie électrique supplémentaire a été constaté par le moyen (10) adapté et qu'un signal de besoin (BS) correspondant a été transmis à l'unité de commande d'accumulateur d'énergie (8).

11. Procédé selon la revendication 10,
**caractérisé en ce**
**que** la charge (S) de l'accumulateur d'énergie (7) résistant aux variations de charge se base sur une prévision de consommation (W) ou sur un profil prédéfini (VP) en tenant compte de l'état de charge (LZ) de l'accumulateur d'énergie (7) résistant aux variations de charge.

12. Procédé selon la revendication 10 ou 11, dans lequel la station-service électrique (1) comprend d'autres accumulateurs d'énergie (7) résistant aux variations de charge, qui sont reliés respectivement par l'intermédiaire d'un autre convertisseur AC/DC (9) à l'alimentation en courant AC (2) de la station-service électrique (1), et dans lequel les unités de commande d'accumulateur d'énergie (8) des accumulateurs d'énergie (7) résistants aux variations de charge sont reliées par l'intermédiaire d'une unité de gestion de charge (11) au moyen (10) servant à constater le besoin (B) en énergie électrique supplémentaire, comprenant les étapes de :
- sélection (AW) de divers ou de plusieurs accumulateurs d'énergie (7) résistants aux variations de charge pour le stockage (S) d'énergie électrique provenant du réseau électrique (6) général par l'unité de gestion de charge (11) selon l'état de charge (LZ) des accumulateurs d'énergie (7) résistants aux variations de charge en l'absence de besoin (B) d'énergie électrique supplémentaire dans l'alimentation en courant AC (2), et
- sélection (AW) de divers ou de plusieurs accumulateurs d'énergie (7) résistants aux variations de charge pour la distribution (A) d'énergie électrique à l'alimentation en courant AC (2) et pilotage (ST) consécutif des accumulateurs d'énergie (7) résistants aux variations de charge sélectionnés par les unités de commande d'accumulateur d'énergie (8) des accumulateurs d'énergie (7) résistants aux variations de charge.

13. Procédé selon la revendication 10, dans lequel le procédé servant à transformer une station-service électrique (1-PA) avec une alimentation en courant AC présente, qui est reliée par l'intermédiaire d'un point de desserte (5) au réseau électrique (6) général, en la station-service électrique (1) comprend les étapes supplémentaires de
- adaptation (AP) de l'alimentation en courant AC (2-PA) de la station-service électrique (1-PA) à transformer au courant total attendu pour la recharge rapide (SL1, SL2, SL3) parallèle dans la mesure où l'alimentation en courant AC (2-PA) présente n'est pas adaptée pour ledit courant total,
- raccordement (AN) de l'accumulateur d'énergie (7) résistant aux variations de charge au moyen du convertisseur AC/DC (9) à l'alimentation en courant AC (2) également adaptée de la station-service électrique (1-PA) à transformer aux fins du stockage (S) d'énergie électrique provenant du réseau électrique (6) général et aux fins de la distribution (A) d'énergie électrique à l'alimentation en courant AC (2) de la station-service électrique (1) si besoin (B),
- insertion (E) du moyen (10) adapté, de préférence comprenant un ou plusieurs capteurs de charge, servant à constater le besoin (B) en énergie électrique supplémentaire dans la station-service électrique (1-PA) à transformer, et
- liaison (VB) du moyen (10) à l'unité de commande d'accumulateur d'énergie (8) de l'accumulateur d'énergie (7) résistant aux variations de charge, qui est prévue pour entraîner la distribution (A) d'énergie électrique à l'alimentation en courant AC (2) en raison du besoin (B) constaté si bien que ni le réseau électrique (6) général ni l'alimentation en courant AC (2) de la station-service électrique (1) ne sont soumis à une surcharge par les recharges rapides (SL1, SL2, SL3) parallèles.

14. Procédé selon la revendication 13,
**caractérisé en ce**
**que** lors d'un pronostic de besoin correspondant, les étapes de raccordement (AN), d'insertion (E) et de liaison (VB) sont mises en œuvre pour d'autres accumulateurs d'énergie (7) résistants aux variations de charge, qui sont reliés après respectivement par l'intermédiaire d'un autre convertisseur AC/DC (9) à l'alimentation en courant AC (2) de la station-service électrique (1).
